(19) Europäisches Patentamt

European Patent Office

Office européen des brevets

(11) **EP 0 565 173 B1**

(12) **EUROPEAN PATENT SPECIFICATION**

(45) Date of publication and mention
of the grant of the patent:
**04.06.1997 Bulletin 1997/23**

(51) Int Cl.6: **C08F 4/646**, C08F 10/00

(21) Application number: **93200923.6**

(22) Date of filing: **31.03.1993**

(54) **Process for preparing polyolefins with broad molecular-weight distribution**

Verfahren zur Herstellung von Polyolefinen mit breiter Molekulargewichtsverteilung

Procédé de préparation de polyoléfines à large distribution de poids moléculaire

(84) Designated Contracting States:
**BE DE FR GB NL**

(30) Priority: 03.04.1992 JP 109070/92
24.04.1992 JP 129835/92
28.04.1992 JP 134493/92
11.06.1992 JP 175907/92
22.06.1992 JP 185722/92

(43) Date of publication of application:
**13.10.1993 Bulletin 1993/41**

(73) Proprietor: **TOHO TITANIUM CO. LTD.**
**Minato-ku Tokyo 105 (JP)**

(72) Inventors:
• **Hosaka, Motoki**
**Koza-gun, Kanagawa-ken (JP)**
• **Terano, Minoru**
**Chigasaki-shi, Kanagawa-ken (JP)**
• **Ishii, Kazuhiro**
**Hachioji-shi, Tokyo (JP)**

(74) Representative: **Barendregt, Frank, Drs. et al**
**van Exter Polak & Charlouis B.V.,**
**P.O. Box 3241**
**2280 GE Rijswijk (NL)**

(56) References cited:
**EP-A- 0 360 497**     **EP-A- 0 385 765**
**EP-A- 0 475 134**     **DE-A- 4 114 833**

Remarks:
The file contains technical information submitted after the application was filed and not included in this specification

**Description**

BACKGROUND OF THE INVENTION

Field Of The Invention

This invention relates to a process for preparing polyolefins, and more particularly to a process for preparing polyolefins with a broad molecular-weight distribution and excellent stereoregularity at high yields.

Background Of The Invention

A number of proposals have been made for the polymerization or copolymerization of olefins in the presence of a polymerizing catalyst comprising a solid catalyst component primarily consisting of titanium halides, a magnesium compound and an electron donor compound; an organic aluminum compound; and a silicon compound having the formula

$$Si(C_6H_{11})_2(OR)_2$$

wherein $C_6H_{11}$ is a cyclohexyl group and R is an alkyl group having 1 to 5 carbon atoms.

Such olefin polymerization catalyst is, for example, disclosed in EP-A-0 360 497.

The foregoing catalysts exhibit a degree of activity sufficient to permit elimination the deashing which removes catalyst residues such as chlorine, titanium and the like remaining in a polymer produced, as well as to improve yields of a stereoregular polymer and increase the activity of the catalyst during polymerization. While these catalysts have provided the foregoing benefits, the polyolefins obtained using these catalysts comprising the highly active catalyst component, organic aluminum compound and silicon compound have a narrow molecular-weight distribution as compared with polyolefins prepared by using the conventional olefin polymerizing catalyst which comprises the titanium trichloride based catalyst component, an organic aluminum compound and an electron donor compound which is added as required. The narrowed molecular-weight distribution causes the formability or moldability of the polyolefin to deteriorate, resulting in some restrictions on the polyolefin's applications.

Various approaches have been tried to improve the molecular weight distribution including the multi-stage polymerization process which provides polyolefins of increased molecular-weight distribution. However, the multi-stage polymerization requires a complicated polymerization operation repeatedly and requires a troublesome treatment for recovering the chelating agent used during the polymerization, which increases the cost of the polymerization process.

In view of the above, Japanese Patent Application Laid Open Publication No. 7703/1991 (3-7703) proposed a process for polymerizing olefins in the presence of an olefin polymerizing catalyst comprising a solid titanium catalyst component consisting essentially of magnesium, titanium, halogen and an electron donor; an organic aluminum compound; and two types of organic silicon compounds serving as the electron donor. The Japanese patent states that the proposed polymerization process eliminates the need for the troublesome multi-stage polymerization process as described above and provides polyolefins of a molecular-weight increased to an intended degree. However, the proposed process likewise renders the polymerization operation troublesome because it requires the use of two types of organic silicon compounds as the electron donor.

Accordingly, a need continues to exist for a polymerization process which produces polyolefins with a broad molecular weight distribution at high levels of catalyst activity.

SUMMARY OF THE INVENTION

The present invention has been made in view of the foregoing disadvantages of the prior techniques while, as a result of our study directed to development of a process for preparing polyolefins with broad molecular-weight distribution which is capable of simplified operation while permitting the catalyst to exhibit a high activity and providing a polymer with high stereoregularity and crystallinity, taking advantage of the fact that use of a solid catalyst component (A) which is prepared according to a specified procedure during the polymerization effectively eliminates the above described disadvantages of prior procedures.

Accordingly, it is an object of the present invention to provide a process for preparing polyolefins with a broad molecular-weight distribution.

It is another object of the present invention to provide a process for preparing polyolefins which is capable of highly simplified operating procedures.

It is a further object of the present invention to provide a process for preparing polyolefins which is capable of ensuring increased polymerization activity.

It is still another object of the present invention to provide a process for preparing polyolefins with high stereoregularity and crystallinity.

In accordance with the present invention, a process for preparing polyolefins with a broad molecular-weight distribution is provided. The process comprises the steps of subjecting olefins to polymerization or copolymerization in the presence of a catalyst comprising a solid catalyst component (A) primarily consisting of titanium halide, a magnesium compound and an electron donor compound; (B) an organic aluminum compound; and (C) an organic silicon compound, having the formula:

$$Si(C_6H_{11})_2(OR)_2$$

wherein $C_6H_{11}$ is a cyclohexyl group and R is an alkyl group having 1 to 5 carbon atoms; wherein said catalyst component (A) is prepared according to a procedure comprising the steps of:

(i) preparing a suspension of dialkoxy magnesium and aromatic hydrocarbon which is liquid at a normal temperature;
(ii) contacting the suspension with titanium tetrachloride;
(iii) adding phthalic acid diester having alkyl groups with 4 carbon atoms or less to the suspension, at a temperature of 90°C or below and adding phthalic acid diester having alkyl groups with 5 carbon atoms or more to the suspension at a temperature of from 90°C to 110°C;
(iv) increasing the temperature of the suspension in order to obtain a solid material;
(v) washing said solid material with aromatic hydrocarbon and;
(vi) reacting said solid material with titanium tetrachloride in the presence of aromatic hydrocarbon which is liquid at a normal temperature at a temperature of from 80 °C to 130 °C in order to obtain said catalyst component.

## DETAILED DESCRIPTION OF THE INVENTION

In the process for preparing polyolefins with a broad molecular-weight distribution according to the present invention, olefins are subject to polymerization or copolymerization in the presence of a catalyst comprising a solid catalyst component (A) mainly consisting of titanium halides, a magnesium compound and an electron donor compound; (B) an organic aluminum compound; and (C) an organic silicon compound, having the formula:

$$Si(C_6H_{11})_2(OR)_2$$

wherein $C_6H_{11}$ is a cyclohexyl group and R is an alkyl group having 1 to 5 carbon atoms, wherein said catalyst component (A) is prepared according to a procedure comprising the steps of:

(i) preparing a suspension of dialkoxy magnesium and aromatic hydrocarbon which is liquid at a normal temperature;
(ii) contacting the suspension with titanium tetrachloride;
(iii) adding phthalic acid diester having alkyl groups with 4 carbon atoms or less to the suspension at a temperature of 90°C or below and adding phthalic acid diester having alkyl groups with 5 carbon atoms or more to the suspension at a temperature of from 90°C to 110°C;
(iv) increasing the temperature of the suspension in order to obtain a solid material;
(v) washing said solid material with aromatic hydrocarbon and;
(vi) reacting said solid material with titanium tetrachloride in the presence of aromatic hydrocarbon which is liquid at a normal temperature at a temperature of from 80 °C to 130 °C in order to obtain said catalyst component.

The magnesium compound used in preparation of the solid catalyst component (A) is preferably dialkoxy magnesium including diethoxy magnesium, di-n-butoxy magnesium, diphenoxy magnesium, di-n-propoxy magnesium, di-sec-butoxy magnesium, di-tert-butoxy magnesium, diisopropoxy magnesium. Diethoxy magnesium is most preferred.

In the preparation of the solid component (A) an aromatic hydrocarbon liquid at a normal (room) temperature is used as a solvent/suspension media. The preferred aromatic compound is selected from toluene, xylene, ethyl benzene, propylbenzen, trimethyl benzene.

The electron donor used to prepare the solid catalyst component (A) is preferably an ester of aromatic carboxylic acid selected from a monoester of an aromatic carboxylic acid such as ethyl tolulate, ethyl anisate, ethyl benzoate, methyl benzoate or the like and a diester of aromatic carboxylic acid including dimethyl phthalate, diethyl phthalate, diisopropyl phthalate, di-n-butyl phthalate, diisobutyl phthalate, di-n-amyl phthalate, diisoamyl phthalate, ethyl-n-butyl phthalate, ethylisobutyl phthalate, ethyl-n-propyl phthalate, diisooctyl phthalate, diisodecyl phthalate, diisopentyl phthalate, di-n-octyl phthalate, diisoheptyl phthalate or the like. Of the aromatic carboxyl esters, the diester of phthalic acid are preferred. Phthalic acid diesters having alkyl groups with 4 carbon atoms or less including diethyl phthalate, dimethyl phthalate, dibutyl phthalate, dipropyl phthalate and the like and diesters of phthalic acid having alkyl groups with 5 carbon atoms or more including diisooctyl phthalate, diisodecyl phthalate, diisopentyl phthalate, di-n-octyl phthalate, diisoheptyl phthalate and the like are particularly preferred.

As the solid catalyst component (A) may be used any suitable material so long as it contains a titanium halide, magnesium compound and electron donor. The solid catalyst component (A) is preferably prepared by forming a suspension of dialkoxy magnesium and aromatic hydrocarbon liquid at normal temperature; contacting the suspension with titanium tetrachloride; adding a phthalic acid diester having alkyl groups with 4 carbon atoms to the suspension at a temperature of 90°C or below; increasing temperature of the suspension; adding phthalic acid diester having alkyl groups with 5 carbon atoms or more to the suspension at a temperature of from 90°C to 110°C; further increasing the temperature of the reaction system to carry out reaction of the suspension at a temperature of from 90°C to 130°C to yield a solid composition; washing the composition with aromatic hydrocarbon; and adding titanium tetrachloride to the composition in the presence of aromatic hydrocarbon which is liquid at a normal temperature to carry out reaction therebetween at a temperature of from 80°C to 130°C, leading to production of the solid catalyst component (A).

The organic aluminum compound (B) used in the present invention includes trialkyl aluminum such as triethyl aluminum, triisobutyl aluminum or the like; alkyl aluminum halide such as diethyl aluminum chloride, ethyl aluminum sesquichloride or the like; and any combination or mixture thereof.

The organic silicon compound (C) used in the present invention is represented by the following general formula:

$$Si(C_6H_{11})_2(OR)_2$$

wherein $C_6H_{11}$ is an cyclohexyl group and R is an alkyl group having 1 to 5 carbon atoms. More specifically, it is any one selected from the group consisting of dicyclohexyldimethoxy silane, dicyclohexyldiethoxy silane, dicyclohexyldipropoxy silane, dicyclohexyldibutoxy silane, and the like. Dicyclohexyldimethoxy silane is preferably used for this purpose.

Ratios among the components (A) to (C) used are not limited to any specific values so long as they do not deteriorate the advantages of the present invention. In general, the organic aluminum component (B) is used at a molar ratio of 5 to 1000 to the titanium atom content of the catalyst component (A) and the organic silicon compound (C) is used at a molar ratio of 0.002 to 0.5 to the organic aluminum component (B).

The polymerization may be carried out in the presence of or absence of an organic solvent. The olefin monomer used may be in the form of either gas or liquid. The temperature for the polymerization is generally 200°C or below and preferably 100°C or below. The pressure for the polymerization is generally 100kg/cm$^2$G or below and preferably 50kg/cm$^2$G or below.

Olefins which are subject to homopolymerization or copolymerization according to the present invention are preferably alpha olefins including ethylene, propylene, 1-butene, 4-methyl-1-pentene and the like.

In accordance with the present invention, only any one of the above-specified materials included in the organic silicon compound (C) is selected, so that polyolefins which have a broad molecular weight distribution sufficient to permit a numerical value obtained by dividing a weight-average molecular weight ($\overline{Mw}$) by a number-average molecular weight ($\overline{Mn}$) to be improved by 2 or more while keeping yields of a stereoregular polymer at a high level, as compared with polyolefins prepared according to the conventional process known in the art may be obtained with high yields.

Now, the present invention will be understood more readily with reference to the following examples and comparative examples, however, these are intended to illustrate the invention and are not to be construed to limit the scope of the invention.

Example 1

(Preparation of Solid Catalyst Component (A))

A round flask having an internal volume of 500ml and equipped with a stirrer was flushed with nitrogen gas. The flask was charged with 10g of diethoxy magnesium and 80ml of toluene to form a suspension. Then, 20ml of TiCl$_4$ was added to the suspension, the temperature was then gradually raised to 60°C. Then, 1.0ml of diethyl phthalate was added to the suspension, temperature was then gradually increased to 110°C. Subsequently, 2.5ml of diisooctyl phthalate was added to the suspension, which was further heated to a temperature of 112°C. A period of time as long as about 1.5 hours was required for heating the suspension to this temperature. Then, the temperature of the suspension was kept at 112°C, during which the suspension was reacted with the diethyl phthalate and diisooctyl phthalate for 1.5 hours, resulting in obtaining a reaction product. After the reaction was completed the reaction product was washed twice with 100ml of toluene (per wash) at 90°C and 20ml of $TiCl_4$ and 80ml of toluene were added to the reaction product, which was then heated to 100°C, to thereby carry out reaction therebetween for 2 hours while stirring. After the reaction, the resultant product was washed with 100ml of n-heptane at 40°C 10 times, resulting in a solid catalyst component being obtained. Solid and liquid materials in the solid catalyst component were separated from each other and then the solid material was subject to Ti analysis. The solid catalyst component contained 3.05% by weight of Ti.

(Preparation of Polymerization Catalyst and Polymerization)

An autoclave having an internal volume of 2.0 liters and equipped with a stirrer was flushed with nitrogen gas. The autoclave was charged with 1.32mmol of triethyl aluminum, 0.13mmol of dicyclohexyldimethoxy silane and 0.0066mmol of the solid catalyst component based on a Ti atom, to thereby prepare a polymerization catalyst. Then, the autoclave was charged with 1.8 liters of hydrogen gas and 1.4 liters of liquified propylene and the polymerization reaction performed for 30 minute at 70°C, resulting in a polymer of a weight (A) being produced. The resultant polymer was subject to extraction for 6 hours using boiling n-heptane to obtain a polymer of a weight (B) insoluble in n-heptane.

The polymerization activity (C) per gram of the solid catalyst component used is represented by the following expression:

$$(C) = (A)(g)/\text{amount of solid catalyst component (g)}$$

A yield (D) of a total crystalline polymer is represented by the following expression:

$$(D) = (B)/(A) \times 100 \ (\%)$$

The values (A) to (D) obtained are listed on Table 1 together with an MI (E) of the polymer produced and its molecular-weight distribution (F).

As can be seen from the foregoing, polyolefins prepared according to the present invention have a molecular-weight distribution increased in value obtained by dividing a weight average molecular weight ($\overline{Mw}$) by a number-average molecular weight ($\overline{Mn}$) by at least 2 or more, as compared with polyolefins prepared by the prior art, resulting in being effectively directed to a wide variety of applications.

Also, polyolefins prepared by the present invention exhibit an increased polymerization activity based on a catalyst component and is increased in yield while being significantly improved in stereoregularity, to thereby exhibit much industrial utility.

Such advantages of the present invention are accomplished by the process of the present invention for polymerizing olefins in the presence of a catalyst of a high activity which does not employ multi-stage polymerization method or the method using two types of organic silicon compounds as described above in connection with the prior art but uses a solid catalyst component (A) which is prepared by a specific procedure which uses two sorts of electron donors, namely a phtalic acid diester having alkyl groups with 4 carbon atoms or less and a phtalic acid diester having alkyl groups with 5 carbon atoms or more.

While the present invention has been described with a certain degree of particularity with reference to the examples, obvious modifications and variations are possible in light of the above teachings. It is therefore to be understood that within the scope of the appended claims, the invention may be practiced otherwise than as specifically described.

Table 1

| | Example 1 |
|---|---|
| Total Amount of Polymer (A) g | 233.2 |
| Amount of Polymer Insoluble in Boiling n-Heptane (B) g | 229.5 |
| Polymerization Activity per Solid Catalytic Component (C) g/g | 22,500 |
| Yield of Total Crystalline Polymer (D) % | 98.4 |
| MI of Polymer Produced (E) g/10min | 5.0 |
| Molecular-Weight Distribution of Polymer Produced (F) ($\overline{Mw}/\overline{Mn}$) | 7.8 |

## Claims

1. A process for preparing polyolefins with a broad molecular-weight distribution comprising the steps of subjecting olefins to polymerization or copolymerization in the presence of a catalyst consisting essentially of a solid catalyst component (A) primarily consisting of titanium halide, a magnesium compound and an electron donor compound; an organic aluminium compound (B); and an organic silicon compound (c) having the formula:

$$Si(C_6H_{11})_2(OR)_2$$

wherein $C_6H_{11}$ is a cyclohexyl group and R is an alkyl group having 1 to 5 carbon atoms, characterized in that said catalyst component (A) is prepared according to a procedure comprising the steps of:

(i) preparing a suspension of dialkoxy magnesium and aromatic hydrocarbon which is liquid at a normal temperature;
(ii) contacting the suspension with titanium tetrachloride;
(iii) adding phthalic acid diester having alkyl groups with 4 carbon atoms or less to the suspension at a temperature of 90°C or below and adding phthalic acid diester having alkyl groups with 5 carbon atoms or more to the suspension at a temperature of from 90°C to 110°C;
(iv) increasing the temperature of the suspension to up to 130°C in order to obtain a solid material;
(v) washing said solid material with aromatic hydrocarbon; and
(vi) reacting said solid material with titanium tetrachloride in the presence of aromatic hydrocarbon which is liquid at a normal temperature at a temperature of from 80 °C to 130 °C in order to obtain said catalyst component.

2. The process of claim 1, wherein the phthalic acid diester having alkyl groups with 4 carbon atoms or less is added to the suspension at a temperature of 90 °C or below and the phthalic acid diester having alkyl groups with 5 carbon atoms or more is added to the suspension at a higher temperature than the temperature of adding the phthalic acid diester having alkyl groups with 4 carbon atoms or less to the suspension.

3. The process of claim 1, wherein the phthalic acid diester having alkyl groups with 4 carbon atoms or less is added to the suspension at a temperature of 90 °C or below and the phthalic acid diester having alkyl groups with 5 carbon atoms or more is added to the suspension at a temperature of 90 °C to 110 °C.

4. The process of claim 1, wherein said organic silicon compound (c) is dicyclohexyldimethoxy silane.

5. The process of claim 1, wherein the molecular weight distribution of polyolefins obtained by dividing a weight-average molecular weight ($\overline{Mw}$) by a number-average molecular weight ($\overline{Mn}$) is 6 or more.

## Patentansprüche

1. Verfahren zur Herstellung von Polyolefinen mit einer breiten Molekulargewichtsverteilung, das die Schritte des Unterwerfens von Olefinen der Polymerisation oder Kopolymerisation im Beisein eines Katalysators umfaßt, der im wesentlichen aus einem festen Katalysatorbestandteil (A), das vorrangig aus Titanhalogenid, einer Magnesiumverbindung und einer Elektronenspenderverbindung besteht; einer organischen Aluminiumverbindung (B); und einer organischen Siliziumverbindung (C) besteht, welche die Formel hat:

$$Si(C_6H_{11})_2(OR)_2$$

worin $C_6H_{11}$ eine Zyclohexylgruppe ist und R eine Alkylgruppe, die 1 bis 5 Kohlenstoffatome hat, ist, **gekennzeichnet dadurch, daß** das Katalysatorbestandteil (A) entsprechend einem Verfahren hergestellt ist, das die Schritte umfaßt:

   (i) Herstellen einer Suspension aus Dialkoxy-Magnesium und aromatischem Kohlenwasserstoff, welcher bei einer Normaltemperatur flüssig ist;
   (ii) Die Suspension mit Titantetraclorid in Verbindung bringen;
   (iii) Hinzufügen von Phthalsäurediester, der Alkylgruppen mit 4 Kohlenstoffatomen oder weniger hat, zu der Suspension bei einer Temperatur von 90 °C oder weniger und Hinzufügen von Phthalsäurediester, der Alkylgruppen mit 5 Kohlenstoffatomen oder mehr hat, zu der Suspension bei einer Temperatur von 90 °C bis 110 °C;
   (iv) Erhöhen der Temperatur der Suspension bis auf 130 °C, um ein festes Material zu erhalten;
   (v) Waschen des festen Materiales mit aromatischem Kohlenwasserstoff; und
   (vi) Reagieren des festen Materiales mit Titantetrachlorid im Beisein von aromatischem Kohlenwasserstoff, welcher bei einer Normaltemperatur flüssig ist, bei einer Temperatur von 80 °C bis 130 °C, um das Katalysatorbestandteil zu erhalten.

2. Verfahren nach Anspruch 1, worin der Phthalsäurediester, der Alkylgruppen mit 4 Kohlenstoffatomen oder weniger hat, zu der Suspension bei einer Temperatur von 90 °C oder weniger und der Phthalsäurediester, der Alkylgruppen von 5 Kohlenstoffatomen oder mehr hat, zu der Suspension bei einer höheren Temperatur als der Temperatur beim Hinzufügen des Phthalsäurediesters, der Alkylgruppen mit 4 Kohlenstoffatomen oder weniger hat, zu der Suspension hinzugefügt wird.

3. Verfahren nach Anspruch 1, worin der Phthalsäurediester, der Alkylgruppen mit 4 Kohlenstoffatomen oder weniger hat, zu der Suspension bei einer Temperatur von 90 °C oder weniger hinzugefügt wird, und der Phthalsäurediester, der Alkylgruppen von 5 Kohlenstoffatomen oder mehr hat, zu der Suspension bei einer Temperatur von 90 °C bis 110 °C hinzugefügt wird.

4. Verfahren nach Anspruch 1, worin die organische Siliciumverbindung (C) Dizyklohexyldimethoxysilan ist.

5. Verfahren nach Anspruch 1, worin die Molekulargewichtsverteilung der Polyolefine, die durch Teilen eines in Bezug auf das Gewicht gemittelten Molekulargewichts (Mw) durch ein in Bezug auf die Anzahl gemittelten Molekulargewichtes (Mn) erhalten wird, 6 oder mehr ist.

## Revendications

1. Un procédé de préparation de polyoléfines à large distribution de poids moléculaire, comprenant les étapes d'exposition d'oléfines à une polymérisation ou une copolymérisation en présence d'un catalyseur consistant essentiellement en un composant catalyseur (A) solide, comprenant principalement un halogénure de titane, un composé de magnésium et un composé donneur d'électrons; un composé d'aluminium organique (B); et un composé de silicium organique (C) ayant la formule :

$$Si(C_6H_{11})_2(OR)_2$$

dans laquelle $C_6H_{11}$ est un groupe cyclohéxyle et R est un groupe alkyle ayant 1 à 5 atomes de carbone, caractérisé en ce que ledit composant catalyseur (A) est préparé selon une procédure comprenant les étapes de:

(i) préparation d'une suspension de magnésium de dialkoxy et d'hydrocarbone aromatique qui est liquide à une température normale;

(ii) mise en contact de la suspension avec tétrachlorure de titane;

(iii) addition d'un diester d'acide phthalique ayant des groupes alkyles présentant 4 atomes de carbone ou moins, à la suspension à une température de 90°C ou moins, et addition d'un diester d'acide phthalique ayant des groupes alkyles présentant 5 atomes de carbone ou plus, à la suspension, à une température comprise dans la plage allant de 90°C à 110°C;

(iv) augmentation de la température de la suspension allant à 130°C, en vue d'obtenir un matériau solide;

(v) rinçage dudit matériau solide avec un hydrocarbure aromatique; et

(vi) mise en réaction dudit matériau solide avec tétrachlorure de titane en présence d'un hydrocarbure aromatique qui est liquide à une température normale, à une température comprise dans la plage allant de 80°C à 130°C, en vue d'obtenir ledit composant catalyseur.

2. Le procédé selon la revendication 1, dans lequel le diester d'acide phtalique ayant des groupes alkyles présentant 4 atomes de carbone ou moins est ajouté à la suspension à une température de 90°C ou moins et le diester d'acide phtalique ayant des groupes alkyles présentant 5 atomes de carbone ou plus est ajouté à la suspension, à une température supérieure à la température d'addition du diester d'acide phtalique ayant des groupes alkyles présentant 4 atomes ou moins.

3. Le procédé selon la revendication 1, dans lequel le diester d'acide phtalique ayant des groupes alkyles présentant 4 atomes de carbone ou moins est ajouté à la suspension à une température de 90°C ou moins, et le diester d'acide phtalique ayant des groupes alkyles présentant 5 atomes de carbone ou plus est ajouté à la suspension, à une température comprise dans la plage allant de 90°C à 110°C.

4. Le procédé selon la revendication 1, dans lequel ledit composé de silicium organique (C) est un silane de dicyclohéxyldiméthoxy.

5. Le procédé selon la revendication 1, dans lequel la distribution de poids moléculaire des polyoléfines obtenue par une division d'un poids moléculaire moyen en poids ($\overline{Mw}$) par un poids moléculaire moyen en nombre ($\overline{Mn}$) est de 6 ou plus.